# EUROPÄISCHE PATENTANMELDUNG

(11) **EP 3 696 497 A1**
(43) Veröffentlichungstag der Anmeldung: **19.08.2020**
(21) Anmeldenummer: 19157157.9
(22) Anmeldetag: 14.02.2019
(51) Int. Cl.: G01B 21/30, G01N 19/08

(54) **VERFAHREN ZUM ÜBERPRÜFEN EINER QUALITÄT EINES WERKSTÜCKS SOWIE RECHENEINRICHTUNG**

(71) Anmelder: Siemens Aktiengesellschaft, 80333 München (DE)
(72) Erfinder: Haghani, Adel, 97074 Würzburg (DE)

(57) **Zusammenfassung**

Die Erfindung betrifft ein Verfahren zum Überprüfen einer Qualität eines Werkstücks (2) mit den Schritten: Bestimmen eines Messsignals, wobei zum Bestimmen des Messsignals zu vorbestimmten Zeitpunkten Messwerte, welche äußere Abmessungen des Werkstücks (2) beschreiben, entlang des Werkstücks (2) erfasst werden, Bereitstellen eines Referenz-Messsignals, wobei das Referenz-Messsignal ein Messsignal eines Referenz-Werkstücks beschreibt, Bestimmen eines Differenzsignals (D) anhand eines Unterschieds zwischen dem Messsignal und dem Referenz-Messsignal und Überprüfen der Qualität des Werkstücks (2) anhand des Differenzsignals (D), wobei ein Frequenzspektrum des Differenzsignals (D) bestimmt wird, überprüft wird, ob zumindest eine vorbestimmte Schwingung (7) in dem Frequenzspektrum vorhanden ist und die Qualität des Werkstücks (2) anhand des Vorhandenseins der zumindest einen vorbestimmten Schwingung (7) überprüft wird.

## Beschreibung

Die vorliegende Erfindung betrifft ein Verfahren zum Überprüfen einer Qualität eines Werkstücks. Bei dem Verfahren wird ein Messsignal bestimmt, wobei zum Bestimmen des Messsignals zu vorbestimmten Zeitpunkten Messwerte erfasst werden. Dabei beschreiben die Messwerte äußere Abmessungen des Werkstücks. Darüber hinaus wird ein Referenz-Messsignal bereitgestellt, wobei das Referenz-Messsignal ein Messsignal eines Referenz-Werkstücks beschreibt. Des Weiteren wird ein Differenzsignal anhand eines Unterschieds zwischen dem Messsignal und dem Referenz-Messsignal bestimmt. Die Qualität des Werkstücks wird dann anhand des Differenzsignals überprüft. Darüber hinaus betrifft die vorliegende Erfindung eine Recheneinrichtung für ein Prüfsystem zum Überprüfen einer Qualität eines Werkstücks.

Aus dem Stand der Technik sind unterschiedliche Verfahren zum Überprüfen einer Qualität eines Werkstücks bekannt. Mit einem derartigen Verfahren soll insbesondere überprüft werden, ob die räumlichen Abmessungen des Werkstücks innerhalb eines vorbestimmten Toleranzbereichs liegen. Derartige Verfahren können bei unterschiedlichen Werkstücken verwendet werden. Beispielsweise kann die Qualität von Werkstücken nach der Fertigung überprüft werden. Zudem kann überprüft werden, ob Werkstücke während einer Verwendung abgenutzt wurden.

Aus dem Stand der Technik ist es ferner bekannt, dass das Werkstück zur Qualitätsprüfung entsprechend vermessen wird. Hierzu kann eine entsprechende Messeinrichtung verwendet werden, mittels welcher die äußeren Abmessungen des Werkstücks bestimmt werden können. Beispielsweise kann das Werkstück mittels der Messeinrichtung zu vorbestimmten Zeitpunkten an vorbestimmten Positionen vermessen werden. Auf Grundlage dieser Messwerte kann dann ein Messsignal erzeugt werden, welches wiederum mit einem Referenz-Messsignal verglichen werden kann. Dieses Referenz-Messsignal stammt von Messungen an einem Referenz-Werkstück, welches Soll-Abmessungen aufweist. Darüber hinaus kann ein Differenzsignal bestimmt werden, welches einen Unterschied zwischen dem Messsignal und dem Referenz-Messsignal beschreibt. Falls sich das Differenzsignal in einem vorbestimmten Toleranzbereich befindet, kann die Qualität des Werkstücks als ausreichend angesehen werden. Falls das Differenzsignal außerhalb des Toleranzbereichs liegt, kann hingegen angenommen werden, dass die Qualität des Werkstücks nicht ausreichend ist.

Es ist Aufgabe der vorliegenden Erfindung, eine Lösung aufzuzeigen, wie die Qualität eines Werkstücks der eingangs genannten Art auf einfache Weise zuverlässiger bestimmt werden kann.

Diese Aufgabe wird erfindungsgemäß durch ein Verfahren, durch eine Recheneinrichtung sowie durch ein Computerprogramm mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren dient zum Überprüfen einer Qualität eines Werkstücks. Das Verfahren umfasst das Bestimmen eines Messsignals, wobei zum Bestimmen des Messsignals zu vorbestimmten Zeitpunkten Messwerte, welche äußere Abmessungen des Werkstücks beschreiben, entlang des Werkstücks erfasst werden. Darüber hinaus umfasst das Verfahren das Bereitstellen eines Referenz-Messsignals, wobei das Referenz-Messsignal ein Messsignal eines Referenz-Werkstücks beschreibt. Ferner umfasst das Verfahren das Bestimmen eines Differenzsignals anhand eines Unterschieds zwischen dem Messsignal und dem Referenz-Messsignal. Außerdem umfasst das Verfahren das Überprüfen der Qualität des Werkstücks anhand des Differenzsignals. Hierbei ist vorgesehen, dass ein Frequenzspektrum des Differenzsignals bestimmt wird und überprüft wird, ob zumindest eine vorbestimmte Schwingung in dem Frequenzspektrum vorhanden ist. Außerdem wird die Qualität des Werkstücks anhand des Vorhandenseins der zumindest einen vorbestimmten Schwingung überprüft.

Mithilfe des Verfahrens soll die Qualität eines Werkstücks überprüft werden. Insbesondere kann mit dem Verfahren überprüft werden, ob die äußeren Abmessungen des Werkstücks und/oder eine Oberflächenbeschaffenheit den gewünschten Vorgaben entspricht. Das Werkstück kann beispielsweise mittels einer Werkzeugmaschine hergestellt beziehungsweise gefertigt werden. Beispielsweise kann das Werkstück durch spanende Verarbeitung, additive Fertigung, ein Umformverfahren, ein Abformverfahren, ein Pressverfahren, ein Druckverfahren oder dergleichen hergestellt werden. Das Werkstück kann aus einem Metall, einer Keramik oder einem Kunststoff gefertigt sein. Es kann auch vorgesehen sein, dass die Qualität des Werkstücks nach dessen Verwendung beziehungsweise Nutzung überprüft wird. Auf diese Weise kann ermittelt werden, ob das Werkstück abgenutzt und/oder beschädigt wurde. Zum Überprüfen der Qualität des Werkstücks kann ein entsprechendes Prüfsystem beziehungsweise eine Werkzeugmaschine verwendet werden. Dieses Prüfsystem kann eine Messeinrichtung aufweisen, mittels welcher die Messwerte bereitgestellt werden können. Diese Messwerte beschreiben die äußeren Abmessungen des Werkstücks. Die Messwerte können also die Erstreckung des Werkstücks in zumindest eine Raumrichtung beschreiben. Darüber hinaus können die Messwerte eine Oberflächenbeschaffenheit des Werkstücks beschreiben. Mittels der Messeinrichtung können die Messwerte zu vorbestimmten Zeitpunkten beziehungsweise mit einer vorbestimmten Abtastrate bestimmt werden. Hierbei ist es insbesondere vorgesehen, dass die Messeinrichtung entlang einer ersten Erstreckungsrichtung des Werkstücks bewegt wird und hierbei die Messwerte aufgenommen werden. Die Messwerte können die Erstreckung des Werkstücks in einer zweiten Erstreckungsrichtung beschreiben. Der zeitliche Verlauf der Messwerte beziehungsweise die zu den vorbestimmten Zeitpunkten aufgenommenen Messwerte können dann in dem Messsignal zusammengefasst werden.

Darüber hinaus wird das Referenz-Messsignal bereitgestellt. Dieses Referenz-Messsignal beschreibt ein Messsignal von einem Referenz-Werkstück. Dieses Referenz-Werkstück dient als Referenz für das zu fertigende Werkstück. Dieses Referenz-Werkstück entspricht insbesondere bezüglich der äußeren Abmessungen und/oder der Oberflächenbeschaffenheit den Soll-Vorgaben. Das Referenz-Messsignal wird analog zu dem Messsignal bestimmt. Des Weiteren wird das Differenzsignal bestimmt, welches einen Unterschied beziehungsweise eine Differenz zwischen dem Messsignal und dem Referenz-Messsignal beschreibt. Dieses Differenzsignal wird nun verwendet, um die Qualität des Werkstücks zu überprüfen.

Gemäß einem wesentlichen Aspekt der Erfindung ist vorgesehen, dass ein Frequenzspektrum des Differenzsignals bestimmt wird. Auf diese Weise können die einzelnen Frequenzanteile des Differenzsignals untersucht werden. Es wird nun überprüft, ob in dem Frequenzspektrum eine vorbestimmte Schwingung oder vorbestimmte Schwingungen vorhanden sind. Auf Grundlage des Vorhandenseins der vorbestimmten Schwingung wird die Qualität des Werkstücks überprüft. Der vorliegenden Erfindung liegt die Erkenntnis zugrunde, dass das Differenzsignal, entsprechende Schwankungen aufweisen kann, falls die äußere Form beziehungsweise die äußeren Abmessungen des Werkstücks von denen des Referenz-Werkstücks abweichen. Bei aus dem Stand der Technik bekannten Verfahren wird lediglich überprüft, ob die Amplitude des Differenzsignals innerhalb eines vorbestimmten Toleranzbereichs liegt. Dabei kann es der Fall sein, dass Abweichungen der äußeren Abmessungen und/oder der Oberflächenbeschaffenheit des Werkstücks, die von dem Referenz-Werkstück abweichen, nicht zuverlässig erkannt werden können. Durch die Auswertung des Frequenzspektrums des Differenzsignals können diese Abweichungen auf zuverlässige Weise erkannt werden. Es hat sich herausgestellt, dass bestimmte Abweichungen des Werkstücks von dem Referenz-Werkstück auf Grundlage von Schwankungen in dem Differenzsignal erkannt werden können. Diese Schwingungen treten üblicherweise in einem bestimmten Frequenzbereich auf. Diese Schwankungen beziehungsweise Schwingungen können durch die Bestimmung des Frequenzspektrums des Differenzsignals erkannt werden. Insgesamt kann somit die Qualität des Werkstücks auf einfache Weise zuverlässiger überprüft werden.

Bevorzugt wird die Qualität des Werkstücks als unzureichend eingestuft, falls das Frequenzspektrum die zumindest eine vorbestimmte Schwingung aufweist. Das Vorhandensein der vorbestimmten Schwingung in dem Frequenzspektrum kann insbesondere anhand einer Amplitude oder Leistung des Frequenzspektrums bestimmt werden. Hierbei ist insbesondere vorgesehen, dass überprüft wird, ob diese Schwingung in einem vorbestimmten Frequenzbereich vorhanden ist. Falls diese Schwingung nicht erkannt wird, kann die Qualität des Werkstücks als ausreichend eingestuft werden. Auf diese Weise kann die Qualität des Werkstücks auf einfache Weise ermittelt werden.

Es kann ferner vorgesehen sein, dass parallel zur Auswertung des Frequenzspektrums des Differenzsignals überprüft wird, ob die Amplitude des Differenzsignals innerhalb des vorbestimmten Toleranzbereichs liegt. Damit kann die Bestimmung der Qualität des Werkstücks präziser durchgeführt werden.

In einer Ausführungsform wird eine Mehrzahl von Frequenzbereichen vorgegeben, und für die Mehrzahl von Frequenzbereichen wird jeweils ein Frequenzspektrum des Differenzsignals bestimmt. Das Differenzsignal kann also in unterschiedlichen Frequenzbereichen beziehungsweise Frequenzbändern ausgewertet werden. Somit kann überprüft werden, ob in den jeweiligen Frequenzbereichen die vorbestimmte Schwingung beziehungsweise eine vorbestimmte Schwingung vorhanden ist. Alternativ oder zusätzlich kann vorgesehen sein, dass das Differenzsignal für eine Mehrzahl von Zeitbereichen ausgewertet wird. In Versuchen kann ermittelt werden, ob die Schwingungen in bestimmten Frequenzbereichen und/oder Zeitbereichen auftreten. In Abhängigkeit von dem Ergebnis der Versuche können dann gezielt einzelne Zeitbereiche und/oder Frequenzbereiche dahingehend überprüft werden, ob sie diese vorbestimmte Schwingung in dem Frequenzspektrum aufweisen.

In einer weiteren Ausführungsform werden die Frequenzspektren für die Mehrzahl von Frequenzbereichen mittels einer Wavelet-Transformation bestimmt. Es kann beispielsweise eine Wavelet-Analyse durchgeführt werden, bei welcher ein Übergang von der Zeitdarstellung in die Spektraldarstellung durchgeführt wird. Hierbei kann die dabei benutzte Basisfunktion für die Wavelet-Transformation entsprechend an die gewünschten Frequenzbereiche angepasst werden. Durch die Wavelet-Transformation beziehungsweise die Wavelet-Analyse kann eine einfache und zuverlässige Auswertung der Frequenzbereiche erfolgen.

In einer weiteren Ausgestaltung wird ein Frequenzspektrum für das Referenz-Messsignal bestimmt und anhand des Frequenzspektrums für das Referenz-Messsignal wird für die jeweiligen Frequenzbereiche ein zulässiger Bereich bestimmt. Darüber hinaus wird bevorzugt überprüft, ob eine Amplitude des Frequenzspektrums des Differenzsignals in den zulässigen Bereichen für die jeweiligen Frequenzbereiche liegt. Für ein Referenz-Werkstück kann das Frequenzspektrum auf Grundlage des Referenz-Messsignals bestimmt werden. Insbesondere ist es vorgesehen, dass von einer Mehrzahl von Referenz-Werkstücken jeweils das Frequenzspektrum bestimmt wird. Für die definierten Frequenzbereiche und/oder Zeitbereiche können dann für die Amplitude des Spektrums der Mittelwert und/oder die Varianz bestimmt werden. Hieraus kann dann der zulässige Bereich für die Amplitude des Frequenzspektrums in dem jeweiligen Frequenzbereich bestimmt werden. Wenn bei der Überprüfung des Werkstücks das Frequenzspektrum bestimmt wird, kann dieses mit dem zulässigen Bereich verglichen werden. Falls die Amplitude des Frequenzspektrums innerhalb des zulässigen Bereichs liegt, kann die Qualität des Werkstücks als ausreichend betrachtet werden. Falls die Amplitude des Frequenzspektrums aber außerhalb des zulässigen Bereichs liegt, kann die Qualität des Werkstücks als unzureichend angenommen werden. Somit kann die Qualität des Werkstücks mit geringem Rechenaufwand und dennoch zuverlässig ermittelte werden.

In einer weiteren Ausführungsform wird in dem Frequenzspektrum ein Rauschbereich definiert, wobei der Rauschbereich bei der Überprüfung der Qualität des Werkstücks unberücksichtigt bleibt. Untersuchungen haben gezeigt, dass hochfrequente Anteile des Differenzsignals von einem Messrauschen stammen können. Diese hochfrequenten Anteile, die dem vorbestimmten Rauschbereich zugeordnet sind, können bei der Überprüfung der Qualität des Werkstücks unberücksichtigt bleiben. Zudem kann es vorgesehen sein, dass vorbestimmte Störungen mit typischen Frequenzen bei der Überprüfung der Qualität des Werkstücks unberücksichtigt bleiben. Beispielsweise können Schwingungen im Bereich von 50 Hz, die von der Netzfrequenz beziehungsweise einer Spannungsversorgung der Messeinrichtung stammen, bei der Überprüfung der Qualität unberücksichtigt bleiben. Somit kann erreicht werden, dass bei der Auswertung des Frequenzspektrums nur die irrelevanten Signalanteile, welche insbesondere Schwankungen des Differenzsignals beschreiben, berücksichtigt werden.

Weiterhin ist vorteilhaft, wenn die Messwerte eine Erstreckung des Werkstücks in Hochrichtung des Werkstücks für jeweilige Positionen entlang einer Längsrichtung des Werkstücks beschreiben. Wie bereits erläutert, können die Messwerte mittels einer entsprechenden Messeinrichtung erfasst werden. Die Messeinrichtung kann dabei die Erstreckung in Hochrichtung des Werkstücks erfassen. Hierzu kann die Messeinrichtung oder ein Teil davon das Werkstück berühren. Es kann auch vorgesehen sein, dass die Messwerte berührungslos erfasst werden. Beispielsweise kann die Messeinrichtung einen entsprechenden Encoder aufweisen. Zum Erfassen der Messwerte kann die Messeinrichtung entlang der Längsrichtung des Werkstücks bewegt werden. Es kann auch vorgesehen sein, dass das Werkstück relativ zu der Messeinrichtung bewegt wird. Hierbei ist insbesondere vorgesehen, dass die Relativbewegung des Werkstücks zu der Messeinrichtung mit einer konstanten Geschwindigkeit erfolgt. Zu den vorbestimmten Zeitpunkten werden dann die Messwerte aufgezeichnet. Somit ergibt sich eine zeitliche Abfolge der Messwerte, welche jeweiligen Positionen entlang der Längsrichtung des Werkstücks zugeordnet sind. Die zeitliche Abfolge von Messwerten beschreibt das Messsignal.

Eine erfindungsgemäße Recheneinrichtung für ein Prüfsystem zum Prüfen einer Qualität eines Werkstücks ist zum Durchführen eines erfindungsgemäßen Verfahrens und der vorteilhaften Ausgestaltungen davon ausgebildet. Die Recheneinrichtung kann einen Prozessor, einen digitalen Signalprozessor, eine anwendungsspezifische Schaltung, einen Rechner oder dergleichen aufweisen. Auf der Recheneinrichtung kann ein Computerprogramm ausgeführt werden.

Ein erfindungsgemäßes Prüfsystem umfasst eine erfindungsgemäße Recheneinrichtung. Das Prüfsystem kann durch eine entsprechende Werkzeugmaschine gebildet sein. Darüber hinaus kann das Prüfsystem eine Messeinrichtung aufweisen, mittels welcher die Messwerte bereitgestellt werden. Diese Messwerte können dann an die Recheneinrichtung übertragen werden. In einem entsprechenden Speicher des Prüfsystems können die Referenz-Werkstücke hinterlegt sein. Diese können dann ebenfalls der Recheneinrichtung zugeführt werden. Mittels der Recheneinrichtung kann dann das Differenzsignal bestimmt werden und das Frequenzspektrum des Differenzsignals bestimmt werden. Auf Grundlage des Frequenzspektrums kann dann die Qualität des Werkstücks mittels der Recheneinrichtung ermittelt werden.

Ein erfindungsgemäßes Computerprogramm umfasst Befehle, die bei der Ausführung des Programms beziehungsweise Computerprogramms durch eine Recheneinrichtung diese veranlassen, das Verfahren auszuführen. Ein weiterer Aspekt der Erfindung betrifft ein computerlesbares (Speicher)medium, umfassend Befehle, die bei der Ausführung durch eine Recheneinrichtung diese veranlassen, das erfindungsgemäße Verfahren und die vorteilhaften Ausgestaltungen auszuführen.

Die mit Bezug auf das erfindungsgemäße Verfahren vorgestellten bevorzugten Ausführungsformen und deren Vorteile gelten entsprechend für die erfindungsgemäße Recheneinrichtung, für das erfindungsgemäße Prüfsystem, für das erfindungsgemäße Computerprogramm sowie für das erfindungsgemäße computerlesbare Speicher(medium).

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: in einer schematischen Darstellung ein Prüfsystem zum Prüfen einer Qualität eines Werkstücks;
- FIG 2: einen Verlauf eines Differenzsignals, welches einen Unterschied zwischen einem Messsignal, welches das Werkstück beschreibt, und einem Referenz-Messsignal beschreibt;
- FIG 3: eine Wavelet-Transformation eines Referenzmesssignals;
- FIG 4: eine Wavelet-Transformation eines Differenzsignals; und
- FIG 5: eine weitere Darstellung einer Wavelet-Transformation eines Differenzsignals.

In den Figuren werden gleiche oder funktionsgleiche Elemente mit den gleichen Bezugszeichen versehen.

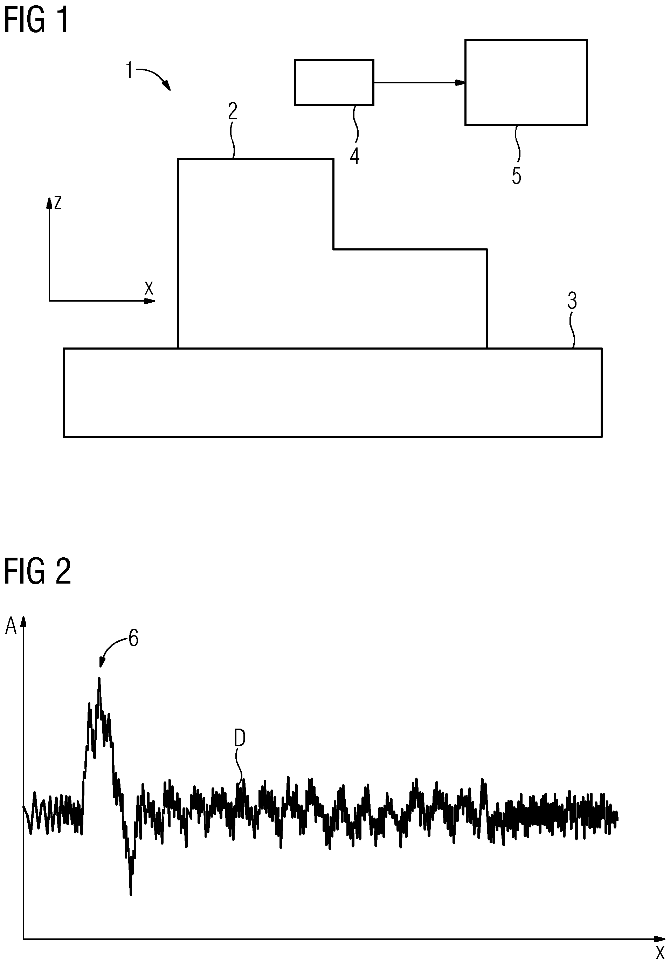

FIG 1 zeigt in einer stark vereinfachten schematischen Darstellung ein Prüfsystem 1. Mit diesem Prüfsystem 1 kann eine Qualität eines Werkstücks 2 überprüft werden. Das Werkstück 2 kann durch ein beliebiges Herstellungsverfahren hergestellt sein. Mittels des Prüfsystems 1 soll insbesondere überprüft werden, ob äußere Abmessungen des Werkstücks 2 in einem vorbestimmten Toleranzbereich liegen. Das Werkstück 2 ist vorliegend zum Prüfen auf einem Träger 3 angeordnet. Mittels einer Messeinrichtung 4 des Prüfsystems 1 werden Messwerte bereitgestellt, welche die äußeren Abmessungen des Werkstücks 2 beschreiben. Beispielsweise kann die Messeinrichtung 4 entlang einer Längsrichtung X des Werkstücks 2 bewegt werden. Zu vorbestimmten Zeitpunkten kann dann mittels der Messeinrichtung 4 jeweils ein Messwert aufgenommen werden, welcher beispielsweise eine Erstreckung des Werkstücks 2 entlang einer Hochrichtung Z des Werkstücks 2 beschreibt.

Der zeitliche Verlauf der Messwerte beziehungsweise die entlang der Längsrichtung X aufgenommenen Messwerte bilden ein Messsignal. Dieses Messsignal kann einer Recheneinrichtung 5 des Prüfsystems 1 zugeführt werden. In der Recheneinrichtung 5 beziehungsweise einem entsprechenden Speicher der Recheneinrichtung 5 kann zudem ein Referenz-Messsignal hinterlegt sein. Dieses Referenz-Messsignal stammt von einer Messung an zumindest einem Referenz-Werkstück. Mittels der Recheneinrichtung 5 kann ein Differenzsignal D bestimmt werden, welches eine Differenz beziehungsweise einen Unterschied zwischen dem Messsignal und dem Referenz-Messsignal beschreibt. Zudem Bestimmen des Differenzsignals D kann auf der Recheneinrichtung 5 ein Computerprogramm ausgeführt werden.

Hierzu zeigt FIG 2 beispielhaft einen Verlauf eines Differenzsignals D. Dabei ist auf der Abszisse die Längsrichtung X des Werkstücks 2 beziehungsweise die Zeit t und auf der Ordinate eine Amplitude A des Differenzsignals D aufgetragen. Gemäß dem Stand der Technik wird überprüft, ob die Amplitude A des Differenzsignals D in einem vorbestimmten Toleranzbereich liegt. Bei dem Toleranzbereich kann es sich beispielsweise um einen sogenannten 3-Sigma-Bereich handeln, welcher auf Grundlage einer Normalverteilung bestimmt wird. Vorliegend weist das Differenzsignal eine Schwankung 6 auf, welche aber innerhalb des Toleranzbereichs liegt. Damit würde die Qualität des Werkstücks 2 bei einem Verfahren gemäß dem Stand der Technik als ausreichend beurteilt werden. Bei näherer Betrachtung kann aber erkannt werden, dass das Differenzsignal D in diesem Bereich eine Schwingung 7 aufweist. Diese Schwingungen stammen von einer Abweichung der äußeren Abmessungen des Werkstücks 2 im Vergleich zu dem Referenz-Werkstück beziehungsweise den Soll-Abmessungen. Um diese Schwingung 7 erkennen zu können, wird der Frequenzbereich des Differenzsignals D untersucht.

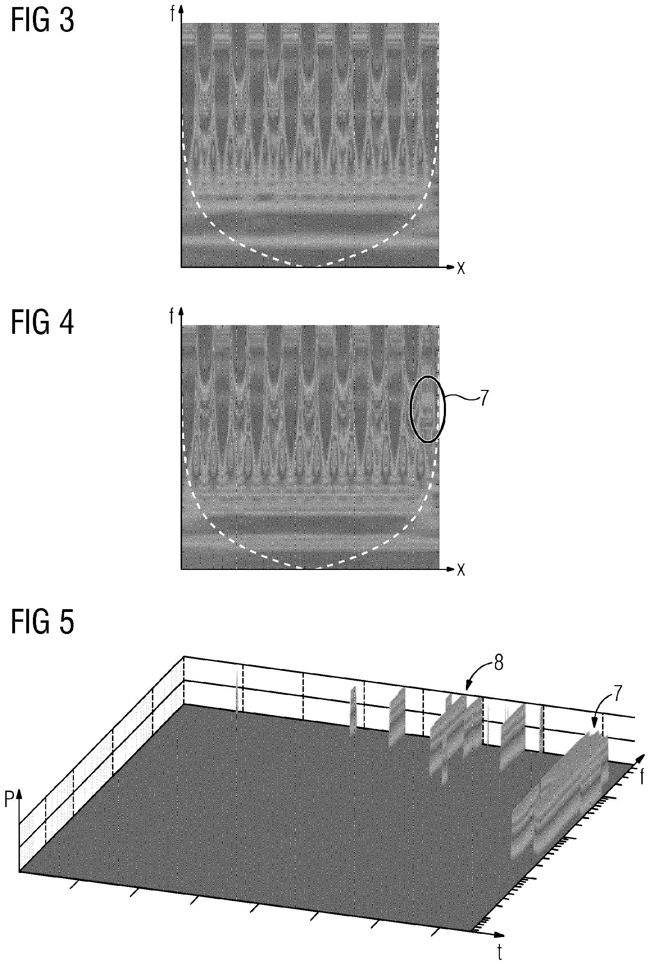

Hierzu zeigt FIG 3 eine Wavelet-Transformation eines Referenz-Messsignals. Hierbei ist auf der Abszisse die Längsrichtung X des Werkstücks 2 beziehungsweise die Zeit t aufgetragen. Auf der Ordinate ist die Frequenz f aufgetragen. Mithilfe der Wavelet-Transformation kann für unterschiedliche Frequenzbereiche und/oder Zeitbereiche ein Frequenzspektrum des Differenzsignals D bestimmt werden. Dabei zeigt FIG 3 eine Wavelet-Transformation für das Referenz-Werkstück.

Im Vergleich hierzu zeigt FIG 4 eine Wavelet-Transformation eines Differenzsignals D. Hier sind deutlich in einem Bereich 7 Schwingungen zu erkennen, welche dem Differenzsignal D zugeordnet werden können. Des Weiteren können diese Schwingungen 7 einem definierten Bereich bezüglich der Längsrichtung X des Werkstücks 2 zugeordnet werden. Die Wavelet-Transformation kann mittels der Recheneinrichtung 5 durchgeführt werden. Zu diesem Zweck kann auf der Recheneinrichtung 5 ein entsprechendes Computerprogramm ausgeführt werden. Somit kann mittels der Recheneinrichtung 5 die Abweichung des Werkstücks 2 von einem Referenz-Werkstück erkannt werden. Es kann auch vorgesehen sein, dass das Ergebnis der Wavelet-Transformation mittels einer Anzeigeeinrichtung des Prüfsystems 1 angezeigt wird. Somit kann eine Person, welche die Prüfung der Qualität des Werkstücks 2 durchführt, die Ergebnisse der Wavelet-Transformation auswerten. Parallel zur Auswertung des Frequenzspektrums beziehungsweise der Wavelet-Transformation kann überprüft werden, ob die Amplitude A des Differenzsignals D innerhalb des vorbestimmten Toleranzbereichs liegt.

FIG 5 zeigt eine Wavelet-Transformation in einer dreidimensionalen Darstellung. Hier ist in Abhängigkeit von der Zeit t beziehungsweise der Längsrichtung X des Werkstücks 2 sowie der Frequenz f die Amplitude P beziehungsweise die Leistung des Frequenzspektrums zu dargestellt. In dem Frequenzspektrum kann ein Rauschbereich 8 bestimmt werden, der vorliegend den hochfrequenten Anteilen des Differenzsignals D zugeordnet ist. In diesem Rauschbereich 8 können Signalanteile vorhanden sein, welche von dem Messrauschen stammen. Diese Signalanteile in dem Rauschbereich 8 können bei der Bestimmung der Qualität des Werkstücks 2 unberücksichtigt bleiben. Bei der vorliegenden Wavelet-Transformation können die vorbestimmten Schwingungen 7 in dem Differenzsignal D deutlich erkannt werden. Dadurch, dass diese Schwingungen 7 in dem Differenzsignal D vorhanden sind, kann davon ausgegangen werden, dass die Qualität des Werkstücks 2 nicht ausreichend ist.

## Patentansprüche

1. Verfahren zum Überprüfen einer Qualität eines Werkstücks (2) mit den Schritten:
- Bestimmen eines Messsignals, wobei zum Bestimmen des Messsignals zu vorbestimmten Zeitpunkten Messwerte, welche äußere Abmessungen des Werkstücks (2) beschreiben, entlang des Werkstücks (2) erfasst werden,
- Bereitstellen eines Referenz-Messsignals, wobei das Referenz-Messsignal ein Messsignal eines Referenz-Werkstücks beschreibt,
- Bestimmen eines Differenzsignals (D) anhand eines Unterschieds zwischen dem Messsignal und dem Referenz-Messsignal und
- Überprüfen der Qualität des Werkstücks (2) anhand des Differenzsignals (D),
**dadurch gekennzeichnet, dass**
- ein Frequenzspektrum des Differenzsignals (D) bestimmt wird,
- überprüft wird, ob zumindest eine vorbestimmte Schwingung (7) in dem Frequenzspektrum vorhanden ist und
- die Qualität des Werkstücks (2) anhand des Vorhandenseins der zumindest einen vorbestimmten Schwingung (7) überprüft wird.

2. Verfahren nach Anspruch 1, **dadurch gekennzeichnet, dass** die Qualität des Werkstücks (2) als unzureichend eingestuft wird, falls das Frequenzspektrum die zumindest eine vorbestimmte Schwingung (7) aufweist.

3. Verfahren nach Anspruch 1 oder 2, **dadurch gekennzeichnet, dass** eine Mehrzahl von Frequenzbereichen vorgegeben wird, und für die Mehrzahl von Frequenzbereichen jeweils ein Frequenzspektrum des Differenzsignals (D) bestimmt wird.

4. Verfahren nach Anspruch 3, **dadurch gekennzeichnet, dass** die Frequenzspektren für die Mehrzahl von Frequenzbereichen mittels einer Wavelet-Transformation bestimmt werden.

5. Verfahren nach Anspruch 3 oder 4, **dadurch gekennzeichnet, dass** ein Frequenzspektrum für das Referenz-Messsignal bestimmt wird und anhand des Frequenzspektrums für das Referenz-Messsignal für die jeweiligen Frequenzbereiche ein zulässiger Bereich bestimmt wird und überprüft wird, ob eine Amplitude (P) des Frequenzspektrum des Differenzsignals (D) in den zulässigen Bereichen für die jeweiligen Frequenzbereiche liegen.

6. Verfahren nach einem der vorhergehenden Ansprüche, **dadurch gekennzeichnet, dass** ein Rauschbereich (8) in dem Frequenzspektrum definiert wird, wobei der Rauschbereich (8) bei der Überprüfung der Qualität des Werkstücks (2) unberücksichtigt bleibt.

7. Verfahren nach einem der vorhergehenden Ansprüche, **dadurch gekennzeichnet, dass** die Messwerte eine Erstreckung des Werkstücks (2) in Hochrichtung (Z) des Werkstücks (2) für jeweilige Positionen entlang einer Längsrichtung (X) des Werkstücks (2) beschreiben.

8. Recheneinrichtung (5) für Prüfsystem (1) zum Überprüfen einer Qualität eines Werkstücks (1), wobei die Recheneinrichtung (5) zum Durchführen eines Verfahrens nach einem der vorhergehenden Ansprüche ausgelegt ist.

9. Prüfsystem (1) zum Überprüfen einer Qualität eines Werkstücks (2) mit einer Recheneinrichtung (5) nach Anspruch 8.

10. Computerprogramm, umfassend Befehle, die bei der Ausführung des Programms durch eine Recheneinrichtung (5) diese veranlassen, das Verfahren nach einem der Ansprüche 1 bis 7 auszuführen.
